# EUROPÄISCHE PATENTSCHRIFT

(11) **EP 3 126 208 B1**
(45) Veröffentlichungstag und Bekanntmachung des Hinweises auf die Patenterteilung: **11.07.2018**
(21) Anmeldenummer: 15707984.9
(22) Anmeldetag: 06.03.2015
(51) Int. Cl.: B62D 25/02

(54) **TRÄGER FÜR EINEN KRAFTWAGEN-ROHBAU**
SUPPORT FOR A MOTOR VEHICLE BODY-IN-WHITE
SUPPORT POUR COQUE DE VÉHICULE AUTOMOBILE

(30) Priorität: 31.03.2014 DE 102014206002
(43) Veröffentlichungstag der Anmeldung: 08.02.2017
(73) Patentinhaber: Bayerische Motoren Werke Aktiengesellschaft, 80809 München (DE)
(72) Erfinder: MIESLINGER, Stefan, 84034 Landshut (DE); KOCH, Andre, 80355 München (DE)
(86) Internationale Anmeldenummer: PCT/EP2015/054706
(87) Internationale Veröffentlichungsnummer: WO 2015/150018

(56) Entgegenhaltungen:
- EP-A1- 2 213 550
- DE-A1-102009 044 417
- US-A1- 2005 121 926
- US-B1- 6 193 306

## Beschreibung

Die Erfindung betrifft einen Träger für einen Kraftwagen-Rohbau, insbesondere einen Seitenschweller für eine Kraftwagenkarosserie, gemäß dem Oberbegriff von Patentanspruch 1.

Ein derartiger, als Seitenschweller ausgebildeter Träger ist beispielsweise bereits aus der JP 5270447 A bekannt. Dort ist in einer durch jeweilige Trägerwände begrenzten Hohlkammer eines geraden Längenbereichs des Trägers ein Verstärkungselement formschlüssig aufgenommen, durch welches der Seitenschweller beispielsweise zur Vermeidung einer übermäßigen Deformation im Falle eines Seitenaufpralls verstärkt ist. Um dabei eine Verschiebung des Verstärkungselements in Trägerlängsrichtung zu vermeiden, sind derartige Verstärkungselemente üblicherweise durch eine jeweilige Fügverbindung, beispielsweise eine Kleb- oder Schweißverbindung, mit den jeweiligen Trägerwänden des Trägers verbunden.

Aus der den nächstliegenden Stand der Technik bildenden EP 2 213 550 A1 ist bereits ein Träger für einen Kraftwagen-Rohbau mit einem geraden Längenbereich bekannt, welcher wenigstens eine durch jeweilige Trägerwände begrenzte Hohlkammer aufweist, in welcher ein Verstärkungselement aufgenommen und in Trägerlängsrichtung festgelegt ist.

Aufgabe der vorliegenden Erfindung ist es, einen Träger der eingangsgenannten Art zu schaffen, welcher auf einfachere und verbesserte Weise innerhalb der zugeordneten Hohlkammer befestigt ist.

Diese Aufgabe wird erfindungsgemäß durch einen Träger mit den Merkmalen des Patentanspruchs 1 gelöst. Vorteilhafte Ausgestaltungen mit günstigen Weiterbildungen der Erfindung sind in den übrigen Patentansprüchen angegeben.

Um einen Träger der eingangs genannten Art zu schaffen, bei welchem auf besonders einfache und zuverlässige Weise das Verstärkungselement positionsgenau in Trägerlängsrichtung festgelegt ist, ist es erfindungsgemäß vorgesehen, dass zur Festlegung der Position des Verstärkungselements in Trägerlängsrichtung dieses kraftschlüssig mit dem Träger bzw. den jeweiligen Trägerwänden verbunden ist. Hierdurch kann insbesondere eine entsprechende Fügverbindung oder andersartige Verbindung zwischen den Trägerwänden des Trägers und dem Verstärkungselement unterbleiben. Dies ermöglicht nicht nur eine besonders einfache und kostengünstige Herstellung des Trägers mit dem integrierten Verstärkungselement insgesamt, sondern gewährleistet außerdem über den Lebenszyklus des Kraftwagens eine äußerst zuverlässige Festlegung des Verstärkungselements in Trägerlängsrichtung. Außerdem kann beispielweise gegenüber einem Schweißverfahren zur Festlegung des Verstärkungselements ein Wärmeeintrag in die beteiligten Bauteile und damit eine unerwünschte Gefügeänderung und damit Bauteilverzug vermieden werden.

Der Kraftschluss zwischen dem Verstärkungselement und den jeweiligen Trägerwänden der Hohlkammer kann dabei in einfacher Weise durch entsprechendes Erwärmen bzw. Abkühlen der beteiligten Bauteile, also des Trägers und des Verstärkungselements, erzielt werden, oder aber beispielsweise auch durch Einpressen des Verstärkungselements in die Hohlkammer. Dabei kann gegebenenfalls auch ein leichtes konisches Zulaufen insbesondere des Verstärkungselements, aber auch der Hohlkammer, vorgesehen sein, um beim Einpressen des Verstärkungselements die entsprechende kraftschlüssige Verbindung der beteiligten Bauteile zu erreichen. Bei der kraftschlüssigen Verbindung können die beiden Bauteile elastisch oder elasto-plastisch verformt werden. Insbesondere ist es beispielsweise denkbar, dass sich die Hohlkammer bzw. die entsprechenden Trägerwände, welche die Hohlkammer begrenzen, aufgrund eines leichten Übermaßes des Verstärkungselements leicht elastisch bzw. elasto-plastisch aufweiten und/oder deformieren. Diese leichte Elastizität des Strangpressprofils hält anschließend auch ohne zusätzliche Maßnahmen das entsprechende Verstärkungselement sicher in seiner Sollposition innerhalb der Hohlkammer.

Von den Trägerwänden stehen jeweilige Stützelemente ab, an welchen das Verstärkungselement kraftschlüssig abgestützt ist. Durch derartige Stützelemente ist auf besonders einfache Weise in Querrichtung bzw. Hochrichtung des Trägers eine formschlüssige und in Längsrichtung des Trägers eine kraftschlüssige Verbindung darstellbar.

Das Verstärkungselement ist als Verstärkungsrohr ausgebildet. Ein derartiges Verstärkungsrohr ist selbst relativ einfach herstellbar und insbesondere in Längsrichtung, aber auch in Querrichtung, mit erheblichen Kräften beaufschlagbar. Dabei sind die Stützelemente des Trägers zur Aufnahme und Abstützung des Verstärkungsrohres als ebene Stützwände ausgebildet, welche in Richtung einer Mittelachse des Verstärkungsrohrs verlaufen. Hierdurch ergibt sich eine kräftemäßig besonders gleichmäßige kraftschlüssige Verbindung zwischen Verstärkungsrohr und Träger.

In weiterer Ausgestaltung der Erfindung hat es sich dabei als vorteilhaft gezeigt, wenn der Träger zumindest im geraden Längenbereich, in welchem das Verstärkungselement angeordnet werden soll, als Strangpressprofil gestaltet ist. Ein derartiges Strangpressprofil ist nicht nur sehr leicht und kostengünstig herstellbar, sondern weist überdies auf einfache Weise eine Hohlkammer kontinuierlichen Querschnitts auf, in welcher besonders günstig ein Verstärkungselement kraftschlüssig festgelegt werden kann.

Die vorstehend beschriebene Integration des Verstärkungselements in dem Träger eignet sich insbesondere zur Anwendung bei einem jeweiligen Seitenschweller eines Kraftwagens. Solche Seitenschweller müssen einerseits in Fahrzeuglängsrichtung verstärkt bzw. ausgesteift werden, um beispielsweise bei entsprechenden unfallbedingten Kraftbeaufschlagungen wie einer Frontalkollision mit geringer Breitenüberdeckung (Offset-Crash) eine hinreichende Stabilität aufzuweisen, und nicht auszuknicken. Ebenso müssen derartige Seitenschweller auch in Fahrzeugquerrichtung eine entsprechende Stabilität aufweisen, um beispielsweise bei einem Seitenaufprall nicht übermäßig deformiert werden zu können, was eine erhebliche Intrusion in die Fahrgastzelle des Kraftwagens zur Folge hätte. Aus diesem Grund ist es in weiterer Ausgestaltung der Erfindung auch vorteilhaft, wenn sich die jeweiligen Hohlkammern der Verstärkungsstruktur in Querrichtung des Trägers erstrecken. Hierdurch lässt sich ein entsprechend hohes Energieabsorptionsvermögen beispielsweise bei einem Seitenaufprall auf einen Seitenschweller darstellen.

Schließlich hat es sich als vorteilhaft gezeigt, wenn an den Trägerwänden des Trägers jeweilige Führungselemente zum Einschieben des Verstärkungselements in Trägerlängsrichtung in die Hohlkammer vorgesehen sind, welche mit korrespondierenden Führungselementen des Verstärkungselements zusammen wirken. Hierdurch lässt sich das Verstärkungselement zur Erzeugung der kraftschlüssigen Verbindung besonders positionsgetreu und mit geringen Toleranzen an die gewünschte Stelle innerhalb der Hohlkammer des Trägers bringen.

Weitere Vorteile und Einzelheiten der Erfindung ergeben sich aus der nachfolgenden Beschreibung bevorzugter Ausführungsbeispiele sowie anhand der Zeichnungen. Dabei zeigen:

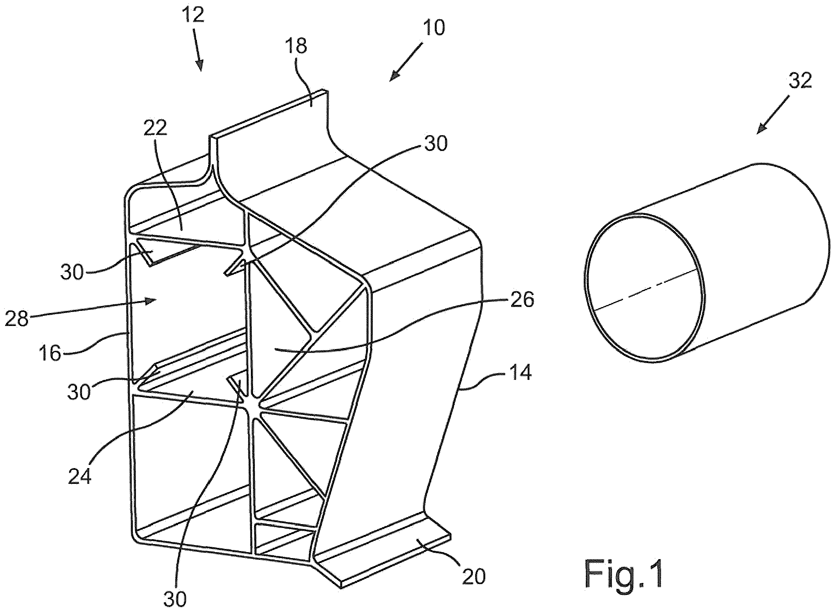

- Fig. 1: eine perspektivische und schematische Explosionsdarstellung auf einen im Querschnitt gezeigten geraden Längenbereich eines Trägers für einen Kraftwagen-Rohbau in Form eines Seitenschwellers, welcher eine Mehrzahl von durch jeweilige Trägerwände begrenzte Hohlkammern aufweist, wobei in einer der Hohlkammern ein separat dargestelltes Verstärkungselement in Form eines Verstärkungsrohrs einbringbar und in Trägerlängsrichtung festlegbar ist, indem das Verstärkungselement kraftschlüssig mit dem Träger verbindbar ist,

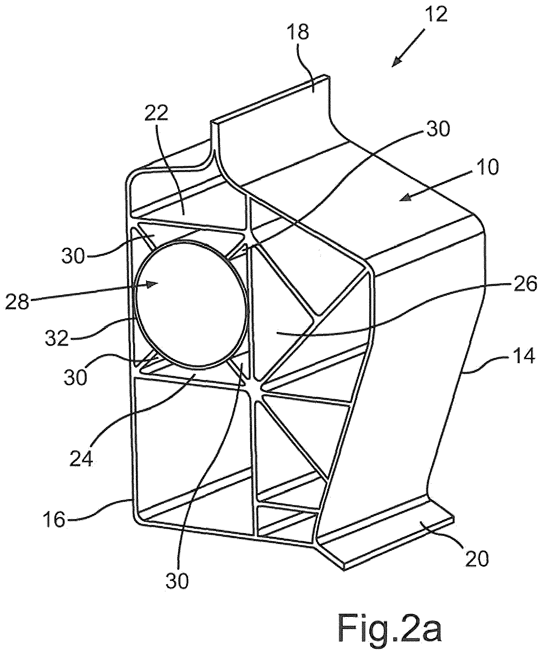

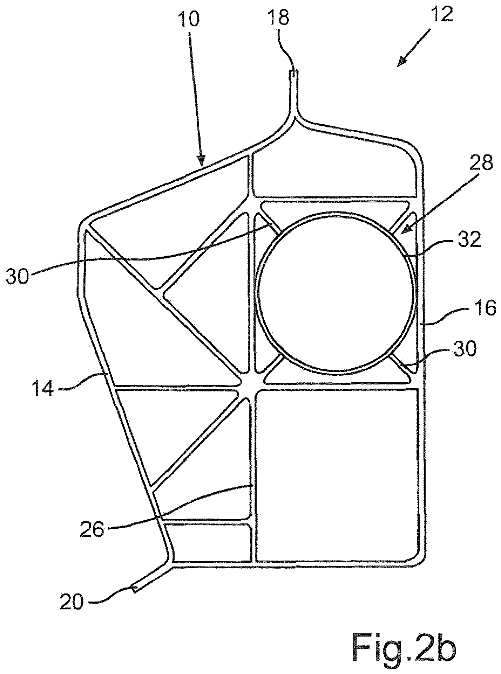

- Fig. 2a, 2b: eine perspektivische Schnittansicht und eine geschnittene Vorderansicht auf den Träger gemäß Fig. 1 mit innerhalb der entsprechenden Hohlkammer aufgenommenem Verstärkungsrohr, welches über jeweilige Stützwände in Querrichtung bzw. Hochrichtung des Trägers formschlüssig und in Längsrichtung des Trägers kraftschlüssig gehalten ist,

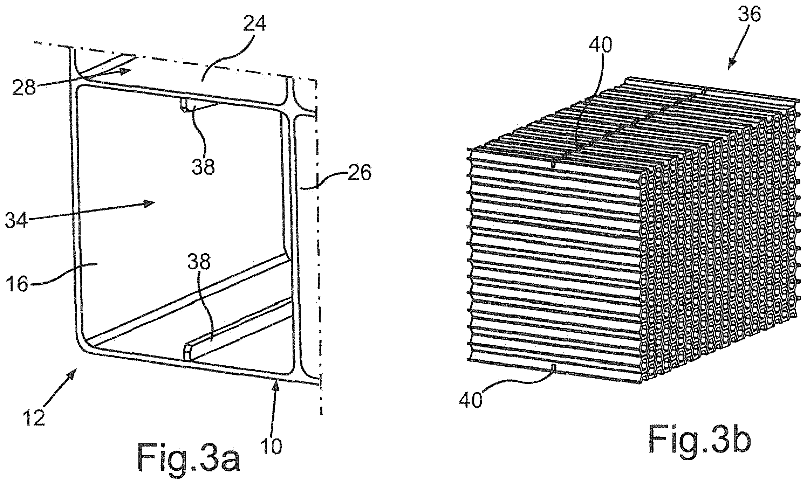

- Fig. 3a, 3b: jeweilige schematische und ausschnittsweise Perspektivansichten auf eine Hohlkammer und ein Verstärkungselement zur Integration in dieser Hohlkammer gemäß einer weiteren Ausführungsform, bei welcher das Verstärkungselement als Verstärkungsstruktur in Form einer Wabenstruktur ausgebildet ist, wobei jeweilige Führungselemente auf Seiten der Hohlkammer und der Wabenstruktur vorgesehen sind, durch welche die Wabenstruktur geführt in die in korrespondierende Hohlkammer einschiebbar ist,

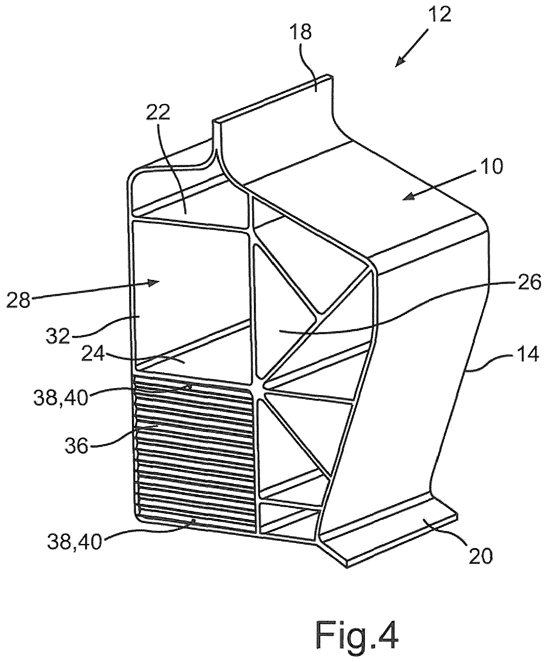

- Fig. 4: eine ausschnittsweise Perspektivansicht auf den Längenbereich des Trägers analog zu Fig. 2a, wobei vorliegend innerhalb der entsprechenden Hohlkammer die Wabenstruktur gemäß Fig. 3b integriert ist,

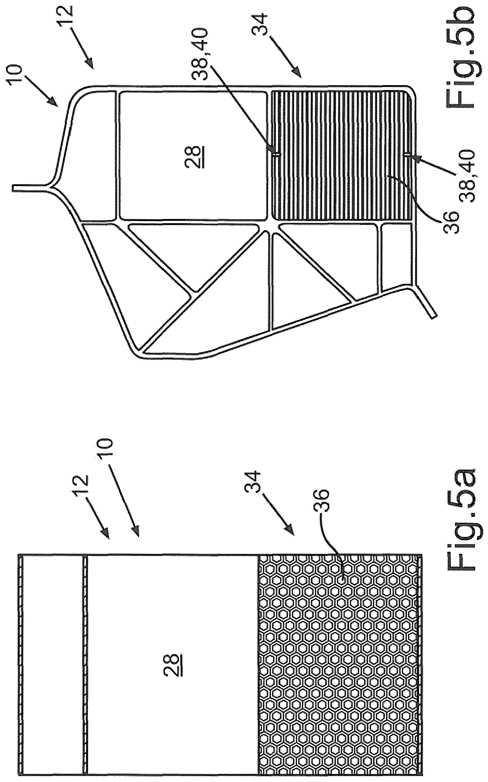

- Fig. 5a, 5b: eine jeweilige Schnittansicht in Längsrichtung bzw. in Querrichtung durch den Träger gemäß den Fig. 3a bis 4 mit der in die entsprechende Hohlkammer integrierten Wabenstruktur.

Die Explosionsdarstellung gemäß Fig. 1 zeigt links ausschnittsweise und perspektivisch einen Ausschnitt eines Längenbereichs 10 eines Trägers für einen Kraftwagen-Rohbau in Form eines Seitenschwellers 12 einer Personenkraftwagenkarosserie, welcher im vorliegenden Fall zumindest im geraden Längenbereich 10 als Strangpressprofil ausgebildet ist. Als Material für dieses Strangpressprofil kommt dabei insbesondere eine Leichtmetalllegierung wie eine Aluminiumlegierung oder aber auch ein Kunststoff, insbesondere faserverstärkt, in Betracht. Der Seitenschweller 12 umfasst dabei eine äußere Trägerwand 14 und eine innere Trägerwand 16, welche sich zwischen jeweiligen Flanschen, einem oberen Flansch 18 und einem inneren Flansch 20 erstrecken. Über diese Flansche 18, 20 sind beispielsweise angrenzende Rohbauteile oder auch Verkleidungsteile mit dem Seitenschweller 12 verbindbar bzw. befestigbar.

Des Weiteren umfasst der Seitenschweller 12 im Längenbereich 10 eine Mehrzahl von Trägerwänden, welche jeweilige Hohlkammern begrenzen. Insbesondere sind hierbei zwei etwa horizontal und in Fahrzeugquerrichtung sich erstreckende Trägerwände 22, 24 vorgesehen, welche gemeinsam mit einer vertikalen und in Fahrzeuglängsrichtung verlaufenden Trägerwand 26 und der inneren Trägerwand 16 eine insgesamt etwa rechteckförmige Hohlkammer 28 begrenzen. Die Trägerwände 16, 22, 24, 26 verlaufen dabei jeweils parallel bzw. im rechten Winkel zueinander, so dass sich insgesamt über den Längenverlauf des Längenbereichs 10 ein entsprechend konstanter, rechteckförmiger Querschnitt der Hohlkammer 28 ergibt.

Ausgehend von jeweiligen Eckbereichen der insgesamt rechteckigförmigen Hohlkammer 28 stehen jeweilige Stützelemente in Form von Stützwänden 30 ab, welche auf im Weiteren noch näher beschriebene Weise zur Aufnahme eines Verstärkungselements in Form eines Verstärkungsrohrs 32 dienen.

Der Zusammenbau des Verstärkungsrohrs 32 mit dem Seitenschweller 12 ist dabei in den Fig. 2a und 2b in einer Perspektivansicht bzw. einer geschnittenen Vorderansicht dargestellt, wobei die beiden Ansichten gedreht sind. Jedenfalls ist hierbei erkennbar, dass die jeweiligen Stützwände 30 so bemessen sind, dass das Verstärkungsrohr 32 in Querrichtung und Hochrichtung des Seitenschwellers 12, also im eingebauten Zustand in Fahrzeugquerrichtung bzw. in Fahrzeughochrichtung, formschlüssig innerhalb der Hohlkammer 28 gehalten ist. Mit anderen Worten kann sich somit das Verstärkungsrohr 32 weder in Fahrzeugquerrichtung noch in Fahrzeughochrichtung bewegen.

Um nun insbesondere auch in Trägerlängsrichtung, beim vorliegenden Seitenschweller 12 also insbesondere in Fahrzeuglängsrichtung, ebenfalls eine Festlegung des Verstärkungsrohrs 32 in seiner Relativposition zum Seitenschweller 12 zu erreichen, ist dieses kraftschlüssig mit dem Träger 12, genauer gesagt mit den jeweiligen Stützwänden 30, verbunden. Diese kraftschlüssige Verbindung kann beispielsweise dadurch erreicht werden, dass das Verstärkungsrohr 32 ein entsprechendes Übermaß gegenüber der Aufnahme, welche die Stützwände 30 bilden, aufweist. Durch entsprechendes Abkühlen des Verstärkungsrohrs 32 oder umgekehrt durch entsprechendes Erwärmen des Seitenschwellers 12 kann beispielsweise die entsprechende kraftschlüssige Verbindung erreicht werden. Gleichfalls wäre es natürlich denkbar, das Verstärkungsrohr 32 in die Hohlkammer 28 einzupressen. Insbesondere bei einem Einpressen kann hierbei auch vorgesehen sein, dass entweder die durch die Stützwände 30 gebildete Aufnahme oder aber das Verstärkungsrohr 32 leicht konisch zulaufen, um das Einpressen zu erleichtern. Jedenfalls soll im Ergebnis eine kraftschlüssige Verbindung zwischen dem Verstärkungsrohr 32 und dem Seitenschweller 12 im entsprechenden Längenbereich 10 erreicht werden, so dass dieser insbesondere auch in Trägerlängsrichtung, also in Fahrzeuglängsrichtung, an Ort und Stelle positioniert ist. Hierdurch werden entsprechende Fügverfahren zum positionsgetreuen Festlegen des Verstärkungsrohrs 32 entbehrlich.

Aus Fig. 2b ist zudem erkennbar, dass die Stützwände 30 zum Verstärkungsrohrs 32 hin orientiert sind. Hierdurch wird eine kräftemäßig besonders gleichmäßige Halterung des Verstärkungsrohrs 32 innerhalb der Hohlkammer 28 erreicht. Die Stützwände 30 können direkt nach den Strangpressen im Anlagebereich des Verstärkungsrohres 32 ihr Endmaß aufweisen, oder aber auch nach dem Strangpressen noch einmal, beispielsweise spanend, bearbeitet werden.

Das Verstärkungsrohr 32 dient insbesondere zur Versteifung bzw. Verstärkung des Seitenschwellers 12 bei einer Frontalkollision, z.B. mit geringer Breitenüberdeckung (Offset-Crash) und vermeidet hierbei insbesondere ein entsprechendes Ausknicken. Somit kann insgesamt ein im Querschnitt reduzierten Träger 12 eingesetzt werden, welcher lediglich an entsprechend belasteten Stellen, welche beispielsweise zum Ausknicken tendieren, durch das Verstärkungsrohr 32 ausgesteift ist. Obwohl die vorliegende Erfindung anhand des Seitenschwellers 12 beschrieben ist, kann die vorliegende Integration des Verstärkungsrohrs 32 auch bei anderen Trägern, beispielsweise den Hauptlängsträgern im Bereich des Vorbaus oder des Heckwagens, oder aber im Bereich unterhalb des Fahrzeugbodens zum Einsatz kommen.

In Fig. 4 ist analog zu Fig. 2a eine weitere Ausgestaltung des Seitenschwellers 12 dargestellt, welcher in seinem Längenbereich 10 analog zur Ausführungsform gemäß den Fig. 1 bis 2b ausgestaltet ist. Hierbei begrenzen die Trägerwände 16, 24, 26 eine unterhalb der oberen Hohlkammer 28 angeordnete untere innere Hohlkammer 34, innerhalb welcher ein Verstärkungselement in Form einer Verstärkungsstruktur 36 aufgenommen ist. Diese Verstärkungsstruktur 36 ist vorliegend als Wabenstruktur ausgebildet, welche gemäß der Perspektivdarstellung in Fig. 3b als Wabenstruktur ausgebildet ist. Die Verstärkungsstruktur 36 kann beispielsweise aus einer Metalllegierung oder einem Kunststoff gebildet sein.

Wie des Weiteren aus Fig. 3a, welche den Längenbereich 10 des Seitenschwellers 12 im Bereich der unteren Hohlkammer 34 darstellt, erkennbar ist, weist der Seitenschweller 12 an den Trägerwänden 16 bzw. 24 entsprechende Führungselemente 38 auf, welche vorliegend als in Trägerlängsrichtung verlaufende Leisten oder dergleichen ausgebildet sind. Diese Leisten 38 wirken mit jeweiligen Führungselementen der Verstärkungsstruktur 36 in Form von Nuten 40 zusammen, welche - in negativer Form zu den Leisten 38 - an der Oberseite und Unterseite der Verstärkungsstruktur 36 verlaufen. Wie dabei aus Fig. 4 erkennbar ist, wirken die jeweiligen Führungselemente 38 in Form der Leisten und die jeweiligen Führungselemente 40 in Form der Nuten auf Seiten des Seitenschwellers 12 bzw. der Verstärkungsstruktur 36 derart zusammen, dass sich beim Einschieben der Verstärkungsstruktur 36 in die Hohlkammer 34 eine entsprechende Führung ergibt, welche beispielsweise ein Verkanten der Verstärkungsstruktur 36 innerhalb der Hohlkammer 34 unmöglich macht. Somit wird eine besonders positionsgetreue Positionierung der Verstärkungsstruktur 36 innerhalb der Hohlkammer 28 erreicht.

Die kraftschlüssige Verbindung zwischen der Verstärkungsstruktur 36 und den jeweiligen Trägerwänden 14, 24, 26 wird vorliegend beispielsweise erreicht, indem die Verstärkungsstruktur 36 in die Hohlkammer 34 eingepresst wird. Hierbei kann die Verstärkungsstruktur 36 und/oder die Hohlkammer 34 einen leicht konischen Verlauf aufweisen. Auch ein Erwärmen der Verstärkungsstruktur 36 und/oder des Seitenschwellers 12 zur Herstellung der kraftschlüssigen Verbindung ist denkbar. Im Ergebnis jedenfalls soll wiederum durch ein entsprechendes Übermaß der Verstärkungsstruktur 36 gegenüber der Hohlkammer 34 die kraftschlüssige Verbindung erzeugt werden, welche ein Verschieben der Verstärkungsstruktur 36 in Trägerlängsrichtung verunmöglicht. Zur Herstellung der kraftschlüssigen Verbindung kann hierbei der Seitenschweller 12 entsprechend elastisch oder elasto-plastisch aufgeweitet werden.

Wie schließlich anhand der Fig. 5a und 5b erkennbar ist, welche einen Längsschnitt bzw. einen Querschnitt des Längenbereichs 10 des Seitenschwellers 12 zeigen, erstrecken sich die jeweiligen Hohlkammern der Verstärkungsstruktur 36 in Trägerquerrichtung, nämlich im vorliegenden Fall in Fahrzeugquerrichtung und etwa horizontal. Hierdurch ergibt sich ein besonders hohes Energieabsorptionsvermögen im Falle eines Seitenaufpralls auf den Seitenschweller 12.

Die beiden Ausführungsformen gemäß den Fig. 1 bis 2b bzw. 3a bis 5b können auch miteinander kombiniert werden, so dass sowohl ein Verstärkungsrohr 32 in der Hohlkammer 28 als auch eine Verstärkungsstruktur 36 in der Hohlkammer 34 integriert ist.

### Bezugszeichenliste

- 10: Längenbereich
- 12: Träger/Seitenschweller
- 14: äußere Trägerwand
- 16: innere Trägerwand
- 18: oberer Flansch
- 20: äußerer unterer Flansch
- 22: Trägerwand
- 24: Trägerwand
- 26: Trägerwand
- 28: Hohlkammer
- 30: Stützwände
- 32: Verstärkungselement/Verstärkungsrohr
- 34: Hohlkammer
- 36: Verstärkungselement/Verstärkungsstruktur
- 38: Führungselemente/Leisten
- 40: Führungselemente/Nuten

## Patentansprüche

1. Träger (12) für einen Kraftwagen-Rohbau, mit einem geraden Längenbereich (10), welcher wenigstens eine durch jeweilige Trägerwände (16, 22, 24, 26) begrenzte Hohlkammer (28, 34) aufweist, in welcher ein Verstärkungselement (32, 36) aufgenommen und in Trägerlängsrichtung festgelegt ist, wobei das Verstärkungselement (32, 36) zur Festlegung in Trägerlängsrichtung kraftschlüssig mit dem Träger (12) verbunden ist, und wobei von den Trägerwänden (16, 22, 24, 26) jeweilige Stützelemente (30) abstehen, an welchen das Verstärkungselement (32) kraftschlüssig abgestützt ist, **dadurch gekennzeichnet, dass** das Verstärkungselement (32) als Verstärkungsrohr ausgebildet ist, wobei die Stützelemente (30) als Stützwände ausgebildet sind, welche in Richtung einer Mittelachse des Verstärkungsrohrs (32) verlaufen.

2. Träger (12) nach Anspruch 1, **dadurch gekennzeichnet, dass** der Träger (12) als Strangpressprofil, insbesondere aus einer Aluminiumlegierung oder aus faserverstärktem Kunststoff, ausgebildet ist.

3. Träger (12) nach Anspruch 1 oder 2, **dadurch gekennzeichnet, dass** der Träger (12) als Seitenschweller ausgebildet ist.

4. Träger (12) nach einem der vorhergehenden Ansprüche, **dadurch gekennzeichnet, dass** an den Trägerwänden (16, 24) des Trägers (12) jeweilige Führungselemente (38) zum Einschieben des Verstärkungselements (36) in Trägerlängsrichtung in die Hohlkammer (34) vorgesehen sind, welche mit korrespondierenden Führungselementen (40) des Verstärkungselements (36) zusammen wirken.

## Claims

1. A support (12) for a motor-vehicle body shell, with a straight length region (10) which has at least one hollow chamber (28, 34) delimited by respective support walls (16, 22, 24, 26), in which chamber a reinforcing element (32, 36) is received and secured in the longitudinal direction of the support, wherein the reinforcing element (32, 36) for securing is connected in non-positive manner to the support (12) in the longitudinal direction of the support, and wherein respective supporting elements (30) protrude from the support walls (16, 22, 24, 26), on which elements the reinforcing element (32) is supported in non-positive manner, **characterised in that** the reinforcing element (32) is designed as a reinforcing tube, the supporting elements (30) being designed as supporting walls which run in the direction of a centre line of the reinforcing tube (32).

2. A support (12) according to Claim 1, **characterised in that** the support (12) is designed as an extruded profile, especially made of an aluminium alloy or of fibre-reinforced plastics material.

3. A support (12) according to Claim 1 or Claim 2, **characterised in that** the support (12) is designed as a side sill.

4. A support (12) according to one of the preceding claims, **characterised in that** respective guide elements (38) for inserting the reinforcing element (36) into the hollow chamber (34) in the longitudinal direction of the support are provided on the support walls (16, 24) of the support (12), which guide elements cooperate with corresponding guide elements (40) of the reinforcing element (36).

## Revendications

1. Support (12) destiné à la structure de base d'un véhicule automobile comprenant une zone longitudinale rectiligne (10) qui comporte au moins une chambre creuse (28, 34) limitée par des parois de support respectives (16, 22, 24, 26) et dans laquelle un élément de renfort (32, 36) est logé et est fixé dans la direction longitudinale du support, l'élément de renfort (32, 36) étant relié au support (12) par une liaison par la force pour permettre sa fixation dans la direction longitudinale de ce support, et, à partir des parois du support (16, 22, 24, 26) s'étendent des éléments de support respectifs (30) sur lesquels s'appuie l'élément de renfort (32) par une liaison par la force,
**caractérisé en ce que**
l'élément de renfort (32) est réalisé sous la forme d'un tube de renfort, et les éléments de support (30) sont réalisés sous la forme de parois de support qui s'étendent dans la direction de l'axe médian du tube de renfort (32).

2. Support (12) conforme à la revendication 1,
**caractérisé en ce qu'**
il est réalisé sous la forme d'un profilé extrudé en particulier en un alliage d'aluminium ou en un matériau synthétique renforcé par des fibres.

3. Support (12) conforme à la revendication 1 ou 2,
**caractérisé en ce qu'**
il est réalisé sous la forme d'un bourrelet latéral.

4. Support (12) conforme à l'une des revendications précédentes,
**caractérisé en ce qu'**
il est prévu sur les parois (16, 24) du support (12) des éléments de guidage respectifs (38) permettant d'insérer l'élément de renfort (36) dans la chambre creuse (34), dans la direction longitudinale du support qui coopère avec des éléments de guidage correspondant (40) de l'élément de renfort (36).
